(19) Europäisches Patentamt European Patent Office Office européen des brevets

(11) EP 4 535 060 A1

(12) EUROPÄISCHE PATENTANMELDUNG

(43) Veröffentlichungstag:
09.04.2025 Patentblatt 2025/15

(21) Anmeldenummer: 24198841.9

(22) Anmeldetag: 06.09.2024

(51) Internationale Patentklassifikation (IPC):
G02B 13/14 (2006.01)    G02B 17/08 (2006.01)
G02B 27/10 (2006.01)

(52) Gemeinsame Patentklassifikation (CPC):
G02B 27/1013; G02B 13/146; G02B 17/0896;
G02B 27/1066; G02B 27/146

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 05.10.2023 DE 102023127132

(71) Anmelder: HENSOLDT Optronics GmbH
73447 Oberkochen (DE)

(72) Erfinder: Achtner, Bertram
73430 Aalen (DE)

(74) Vertreter: Lorenz & Kollegen
Lorenz & Kollegen Patentanwälte
Partnerschaftgesellschaft mbB
Alte Ulmer Straße 2
89522 Heidenheim (DE)

(54) **OPTIKVORRICHTUNG ZUM AUFFANGEN UND ABBILDEN EINER VON EINER OBJEKTSZENE AUSGEHENDEN STRAHLUNG**

(57) Die Erfindung betrifft eine Optikvorrichtung (1) zum Auffangen und Abbilden einer von einer Objektszene (2) ausgehenden Strahlung (3), mit einer Mehrzahl an optischen Elementen (4) in einem Strahlengang (5), wobei in einer Ausbreitungsrichtung der Strahlung (3) nacheinander eine Frontgruppe (7), eine Zoomgruppe (8), eine Irisblende (9), eine Hauptgruppe (10) und ein Strahlteilerelement (11) auf einer gemeinsamen optischen Achse (12) angeordnet sind, wobei das Strahlteilerelement (11) zur Aufteilung des Strahlengangs (5) in zwei Arme und eines Spektrums der Strahlung (3) in einen ersten Spektralbereich in einem ersten Arm (13) des Strahlengangs (5) und einen zweiten Spektralbereich in einem zweiten Arm (14) des Strahlengangs eingerichtet ist, wobei nach dem Strahlteilerelement (11) wenigstens
- entlang einer ersten optischen Achse (13a) des ersten Arms (13) eine erste Detektoreinrichtung (15) angeordnet ist, und
- entlang einer zweiten optischen Achse (14a) des zweiten Arms (14) eine zweite Detektoreinrichtung (16) angeordnet ist.

Erfindungsgemäß ist vorgesehen, dass die optischen Elemente (4) wenigstens teilweise derart optisch korrigiert sind, dass auf allen Detektoreinrichtungen (15,16) während eines Zoomens die sich verändernde Objektszene (2) scharf abgebildet ist.

Fig. 1

EP 4 535 060 A1

**Beschreibung**

Die Erfindung betrifft eine Optikvorrichtung zum Auffangen und Abbilden einer von einer Objektszene ausgehenden Strahlung, mit einer Mehrzahl an optischen Elementen in einem Strahlengang, wobei in einer Ausbreitungsrichtung der Strahlung nacheinander eine Frontgruppe, eine Zoomgruppe, eine Irisblende, eine Hauptgruppe und ein Strahlteilerelement auf einer gemeinsamen optischen Achse angeordnet sind, wobei das Strahlteilerelement zur Aufteilung des Strahlengangs in zwei Arme und eines Spektrums der Strahlung in einen ersten Spektralbereich in einem ersten Arm des Strahlengangs und einen zweiten Spektralbereich in einem zweiten Arm des Strahlengangs eingerichtet ist, wobei nach dem Strahlteilerelement wenigstens entlang einer ersten optischen Achse des ersten Arms eine erste Detektoreinrichtung angeordnet ist, und entlang einer zweiten optischen Achse des zweiten Arms eine zweite Detektoreinrichtung angeordnet ist.

Aus der DE 10 2011 106 585 B4 ist ein Adaptionsobjektiv zur ergänzenden Abbildung eines zweiten Spektralbereichs in einem einen ersten Spektralbereich abbildenden Abbildungsobjektiv bekannt.

Die DE 10 2012 005 938 A1 offenbart ein multispektrales Zoomobjektiv sowie ein Kamerasystem mit einem solchen Zoomobjektiv. Das Zoomobjektiv umfasst entlang eines gemeinsamen Abbildungspfads wenigstens eine entlang des Abbildungspfads verschiebbare optische Zoomgruppe.

Nachteilig an der aus der DE 10 2011 106 585 B4 bekannten Lösung ist, dass das Adaptionsobjektiv Abbildungsfehler, insbesondere Farbfehler, kompensieren muss. Das Adaptionsobjektiv entspricht hierbei einer Detektor-Abbildungsgruppe.

Nachteilig an der aus der DE 10 2012 005 938 A1 bekannten Lösung ist, dass wenigstens eine Abbildungsgruppe verschiebbar angeordnet werden muss, was einen Mehraufwand an Mechanik, Elektronik und Software bedeuten kann.

Der vorliegenden Erfindung liegt die Aufgabe zugrunde, eine Optikvorrichtung der eingangs erwähnten Art zu schaffen, welche die Nachteile des Standes der Technik vermeidet, insbesondere eine präzise Abbildung einer Strahlung ermöglicht.

Erfindungsgemäß wird diese Aufgabe von einer Optikvorrichtung mit den in Anspruch 1 genannten Merkmalen gelöst.

Die erfindungsgemäße Optikvorrichtung zum Auffangen und Abbilden einer von einer Objektszene ausgehenden Strahlung, umfasst eine Mehrzahl an optischen Elementen in einem Strahlengang, wobei in einer Ausbreitungsrichtung der Strahlung nacheinander eine Frontgruppe, eine Zoomgruppe, eine Irisblende, eine Hauptgruppe und ein Strahlteilerelement auf einer gemeinsamen optischen Achse angeordnet sind. Ferner ist das Strahlteilerelement zur Aufteilung des Strahlengangs in zwei Arme und eines Spektrums der Strahlung in einen ersten Spektralbereich in einem ersten Arm des Strahlengangs und einen zweiten Spektralbereich in einem zweiten Arm des Strahlengangs eingerichtet. Außerdem ist nach dem Strahlteilerelement wenigstens

- entlang einer ersten optischen Achse des ersten Arms eine erste Detektoreinrichtung angeordnet, und
- entlang einer zweiten optischen Achse des zweiten Arms eine zweite Detektoreinrichtung angeordnet.

Erfindungsgemäß sind die optischen Elemente wenigstens teilweise derart optisch korrigiert, dass auf allen Detektoreinrichtungen während eines Zoomens die sich verändernde Objektszene scharf abgebildet ist.

Die vorbeschriebene erfindungsgemäße Optikvorrichtung bildet vorzugsweise ein multispektrales Zoomobjektiv aus, welches aus der Frontgruppe, der Zoomgruppe, der Irisblende, der Hauptgruppe und dem Strahlteilerelement besteht, die an der gemeinsamen optischen Achse angeordnet sind. Im Strahlteilerelement erfolgt hierbei die Aufteilung des Spektrums der Strahlung.

Die erfindungsgemäße Optikvorrichtung gewährleistet sowohl bei einer Fokussierung, d. h. einer Einstellung auf Objekte in beliebiger Entfernung, als auch bei einer Luftdrucckompensation und/oder einer Temperaturkompensation eine scharfe Abbildung auf allen Detektoreinrichtungen.

Die optische Korrektur der erfindungsgemäßen Optikvorrichtung ist vorzugsweise derart durchgeführt, dass auf allen Detektoreinrichtungen während des Zoomens die sich verändernde Objektszene immer scharf abgebildet ist.

Im Vergleich zu der aus der DE 10 2011 106 585 B4 bekannten Lösung muss bei der erfindungsgemäßen Optikvorrichtung kein Adaptionsobjektiv vorgehalten werden, bei dem ein Spektralbereich eines vorhandenen Abbildungsobjektivs erweitert wird. Demnach muss bei der erfindungsgemäßen Optikvorrichtung im Vergleich zu der aus der DE 10 2011 106 585 B4 bekannten Lösung eine Korrektur des Adaptionsobjektiv nicht so gestaltet werden, dass Abbildungsfehler, insbesondere Farbfehler, die in einem gemeinsamen Pfad mit bis zu fünf Strahlteilern entstehen, kompensiert werden.

Verglichen mit dem aus der DE 10 2012 005 938 A1 bekannten Zoomobjektiv kann bei der erfindungsgemäßen Optikvorrichtung auf eine entlang der jeweiligen optischen Achse verschiebbar angeordnete Abbildungsgruppe verzichtet werden. Diese ist bei der aus der DE 10 2012 005 938 A1 geschilderten Lösung dazu vorgesehen, eine Schnittweiten-Kompensation zu ermöglichen, wenn entfernt auseinanderliegende Spektralbereiche auf den ersten und den zweiten Detektor abgebildet werden sollen. Bei der in der DE 10 212 005 938 A1 geschilderten Lösung müssen die jeweiligen Abbildungsgruppen verschoben werden, um im beobachteten Spektralbereich zu fokussieren und somit beide Bildinhalte scharf darstellen zu können.

Unter der Eigenschaft, dass ein optisches Element korrigiert ist, ist im Rahmen der Erfindung eine Ausbildung des optischen Elements derart zu verstehen, dass ein Ausmaß optischer Aberrationen minimiert ist. Dies kann insbesondere durch eine besondere räumlich-körperliche Ausbildung des optischen Elements und/oder durch eine geeignete Beschichtung desselben und/oder durch ein geeignetes Material desselben und/oder durch eine Ausbildung als Kombination aus Einzelelementen erfolgen.

In einer vorteilhaften Weiterbildung der erfindungsgemäßen Optikvorrichtung kann vorgesehen sein, dass entlang der ersten optischen Achse eine erste Detektor-Abbildungsgruppe optischen Achse eine zweite Detektor-Abbildungsgruppe und die zweite Detektoreinrichtung angeordnet sind.

Auf Detektoreinrichtungen mit unterschiedlichen Formaten wird vorzugsweise in einer horizontalen und/oder einer vertikalen Richtung eine andere Objektszene abgebildet.

Um zu gewährleisten, dass in horizontaler und/oder in vertikaler Richtung auf den jeweiligen Detektoreinrichtungen die gleiche Objektszene dargestellt wird, ist es von Vorteil, wenn eine jeweilige Brennweite durch die erste Detektor-Abbildungsgruppe und/oder die zweite Detektor-Abbildungsgruppe entsprechend angepasst ist.

Vorzugsweise ist somit nach dem Strahlteilerelement entlang der ersten optischen Achse die erste Detektor-Abbildungsgruppe zusammen mit dem ersten Detektor bzw. der ersten Detektoreinrichtung angeordnet und entlang der zweiten optischen Achse ist die zweite Detektor-Abbildungsgruppe zusammen mit dem zweiten Detektor bzw. der zweiten Detektoreinrichtung angeordnet.

Die jeweiligen Detektor-Abbildungsgruppen werden vorzugsweise dazu verwendet, eine jeweilige Brennweite derart anzupassen, dass in horizontaler und/oder vertikaler Richtung auf allen Detektoren das gleiche Objektfeld bzw. die gleiche Objektszene abgebildet wird, ohne diese für eine scharfe Abbildung verschieben zu müssen. Von besonderem Vorteil ist diese Eigenschaft, wenn auf mehr als zwei Detektoren abgebildet wird.

In einer vorteilhaften Weiterbildung der erfindungsgemäßen Optikvorrichtung kann vorgesehen sein, dass entlang der ersten optischen Achse lediglich die erste Detektoreinrichtung angeordnet ist, und entlang der zweiten optischen Achse die zweite Detektor-Abbildungsgruppe und die zweite Detektoreinrichtung angeordnet sind, wobei die erste und die zweite Detektoreinrichtung wenigstens annähernd gleiche Bildfeldformate aufweisen.

Sind Unterschiede in der jeweiligen Brennweite vernachlässigbar, so kann auf eine der mehreren Detektor-Abbildungsgruppen verzichtet werden.

In einer vorteilhaften Weiterbildung der erfindungsgemäßen Optikvorrichtung kann vorgesehen sein, dass die Zoomgruppe eine erste Untergruppe und eine zweite Untergruppe aufweist, welche entlang der gemeinsamen optischen Achse beweglich angeordnet sind.

Vorzugsweise sind ausschließlich die erste Untergruppe, welche auch als Variatorgruppe bezeichnet werden kann, und die zweite Untergruppe, welche auch als Kompensatorgruppe bezeichnet werden kann, entlang der optischen Achse beweglich angeordnet.

Während eines Zoomens werden die Positionen der ersten und der zweiten Untergruppe entlang der optischen Achse kontinuierlich verändert.

Vorzugsweise erfolgen außer der Brennweitenveränderung auch die Fokussierung sowie die Luftdruckkompensation und/oder die Temperaturkompensation ausschließlich mit der ersten Untergruppe und der zweiten Untergruppe.

In einer vorteilhaften Weiterbildung der erfindungsgemäßen Optikvorrichtung kann vorgesehen sein, dass ausschließlich die erste Untergruppe und die zweite Untergruppe beweglich angeordnet sind.

Sind lediglich die erste Untergruppe und die zweite Untergruppe beweglich angeordnet, so verringert sich ein Aufwand an Mechanik und/oder Aktuatorik weiter in erheblichem Maße.

In einer vorteilhaften Weiterbildung der erfindungsgemäßen Optikvorrichtung kann vorgesehen sein, dass die optischen Elemente teilweise oder vollständig, vorzugsweise über einen Spektralbereich der Strahlung von 400 nm - 2000 nm, chromatisch korrigiert sind.

Chromatische Aberrationen, insbesondere Farblängsfehler, stellen einen großen Beitrag zu Fehlern optischer Abbildungen dar.

Ein absoluter Farblängsfehler ΔCHL einer Einzellinse für ein Objekt, welches im Unendlichen angeordnet ist, ist gegeben durch die Formel (1).

$$\Delta CHL = \frac{|f|}{\nu} \tag{1}$$

In Formel (1) ist die Brennweite der Einzellinse durch f gegeben. Ferner gibt ν eine Abbezahl eines Glasmaterials der Einzellinse und somit ein Maß für eine Dispersion an.

Die Abbezahl wird aus den Brechzahlen n für drei unterschiedliche Wellenlängen $\lambda_1$, $\lambda_{REF}$ und $\lambda_2$ berechnet.

Hierbei gilt $\lambda_1 < \lambda_{REF} < \lambda_2$. Zur Berechnung der Abbezahl v wird vorzugsweise die Formel (2) herangezogen.

$$\nu = \frac{n(\lambda ref) - 1}{n(\lambda 1) - n(\lambda 2)} \qquad (2)$$

Zur Charakterisierung eines visuellen Wellenlängenspektrums werden typischerweise die Abbezahlen $v_d$ sowie $v_e$ verwendet. Die Abbezahl $v_d$ ist durch Formel (3) gegeben.

$$\nu_d = \frac{n(587,56nm) - 1}{n(486,13nm) - n(656,27nm)} \qquad (3)$$

Ferner ist die Abbezahl $v_e$ durch die Formel (4) gegeben.

$$\nu_e = \frac{n(546,07nm) - 1}{n(479,99nm) - n(643,85nm)} \qquad (4)$$

Für derzeit bekannte und üblicherweise verwendete optische Gläser gilt im Wesentlichen $10 < v_d < 100$ und $10 < v_e < 100$.

Für eine Einzellinse aus arsen- und bleifreiem, bariumhaltigem Kronglas, insbesondere einem Borosilikat-Kronglas, welches insbesondere von dem Hersteller Schott AG unter dem Namen N-BK 7 vertrieben wird, weist die Abbezahl $v_d = 64{,}17$ auf. Wird ferner eine Brennweite von f = 100 mm angenommen, so beträgt der absolute Farblängsfehler $\Delta CHL = 1{,}56$ mm in einem Spektrum von $\lambda_1 = 486{,}13$ nm bis $\lambda_2 = 656{,}27$ nm.

In einem Wellenlängenspektrum von 400 nm bis 2000 nm mit $\lambda_1 = 400$ nm, $\lambda_{REF} = 1000$ nm und $\lambda_2 = 2000$ nm hat Borosilikat-Kronglas insbesondere die von der Firma Schott AG vertriebene Variante N-BK 7 eine Abbezahl von v = 13,96.

Ein absoluter Farblängsfehler ist somit durch $\Delta CHL = 7{,}16$ mm gegeben.

In analoger Weise kann bei einer bekannten Brennweite und bei bekannten absoluten Farblängsfehlern die dazugehörige Abbezahl berechnet werden.

In den oben geschilderten Ausführungen ist die Abbezahl eine Materialeigenschaft eines optischen Glases.

In einer vorteilhaften Weiterbildung der erfindungsgemäßen Optikvorrichtung kann vorgesehen sein, dass die Frontgruppe chromatisch korrigiert ist, wobei in der Frontgruppe wenigstens ein Zwei- und/oder Dreifachkittglied vorgesehen ist.

Vorzugsweise ist eine achromatische Doubletlinse aus zwei verkitteten Einzellinsen ausgebildet, welche aus unterschiedlichen Materialien bestehen.

Für eine derartige achromatische Doubletlinse kann analog zu der oben geschilderten Berechnung der Abbezahl eine sogenannte Achromat-Abbezahl $v_{achr}$ definiert werden.

Bei einer bekannten bzw. vorgegebenen Brennweite und einem bekannten bzw. vorgegebenen absoluten Farblängsfehler $\Delta CHL$ ergibt sich die Achromat-Abbezahl $v_{achr}$ aus der Formel (5).

$$\nu_{achr} = \frac{|f|}{\Delta CHL} \qquad (5)$$

Sind durch den Wert $CHL_{max}$ ein maximaler Farblängsfehler und durch den Wert $CHL_{min}$ ein minimaler Farblängsfehler einer achromatischen Doubletlinse in einem betrachteten Spektrum gegeben, so gilt für den absoluten Farblängsfehler $\Delta CHL$ die Formel (6).

$$\Delta CHL = CHL_{max} - CHL_{min} \qquad (6)$$

Bei einer achromatischen Doubletlinse für das visuelle Spektrum, welche eine Brennweite von f = 100 mm aufweist, sowie einen Farblängsfehler von $CHL_{max} = 0{,}159$ mm bei $\lambda = 643{,}85$ nm und $CHL_{min} = -0{,}231$ mm bei $\lambda = 479{,}99$ nm ergibt sich eine Achromat-Abbezahl von $v_{achr} = 256{,}4$.

Eine derartige Achromat-Abbezahl ist deutlich größer als die Abbezahl eines beispielsweise einfarbigen, optischen Glases. Somit ist eine Dispersion und somit auch ein Farbfehler geringer als bei einem einfachen optischen Glas.

Wie bereits vorstehend erläutert, ist in der erfindungsgemäßen Optikvorrichtung bzw. dem hierdurch ausgebildeten multispektralen Zoomobjektiv die Farbkorrektur über einen großen Spektralbereich, vorzugsweise von 400 nm bis 2000 nm, durchgeführt.

Um eine derartige gute Farbkorrektur der Optikvorrichtung in dem gesamten Spektrum von 400 nm bis 2000 nm zu realisieren, ist es von Vorteil, wenn vorgesehen ist, dass die einzelnen optischen Gruppen der Optikvorrichtung jeweils für sich farbkorrigiert sind.

Von besonderem Vorteil ist es, wenn die Frontgruppe farbkorrigiert ausgebildet ist.

Insbesondere kann eine gute Farbkorrektur der Frontgruppe durch Verwendung von mindestens einem Zweifach-Kittglied und/oder Dreifach-Kittglied, d. h. einer Doubletlinse und/oder einer Tripletlinse, erreicht werden.

Bei einem Kittglied handelt es sich um ein mehrere Linsen umfassendes optisches System, wobei das optische System selbst als Linse wirkt und die einzelnen Linsen untereinander mittels Kittes miteinander verbunden sind.

Vorzugsweise ist die Frontgruppe aus einer Einzellinse und einem Kittglied ausgebildet. Alternativ oder zusätzlich kann vorgesehen sein, dass die Frontgruppe aus zwei Einzellinsen und einem Kittglied ausgebildet ist.

Hierbei ist das Kittglied vorzugsweise aus zwei oder drei Linsen ausgebildet.

Das Kittglied sowie die Einzellinse bzw. die Einzellinsen bei Vorhandensein mehrerer Einzellinsen können auf vielfältige Art kombiniert werden. Es kann vorgesehen sein, dass die Kombination des Kittglieds mit der Einzellinse in einer Reihenfolge Einzellinse - Kittglied oder Kittglied - Einzellinse erfolgt.

Es kann vorgesehen sein, dass eine Kombination eines Kittglieds mit zwei Einzellinsen in einer Reihenfolge Einzellinse - Einzellinse - Kittglied oder Einzellinse - Kittglied - Einzellinse oder Kittglied - Einzellinse - Einzellinse erfolgt.

Die vorbeschriebenen Reihenfolgen sind in Strahlausbreitungsrichtung zu verstehen.

Es kann in vorteilhafter Weise vorgesehen sein, dass eine oder mehrere Glas-Luft-Grenzflächen asphärisch ausgebildet sind.

Die Achromat-Abbezahl der Frontgruppe $v_{achr}$ (Frontgruppe) gilt hierbei vorzugsweise über das Spektrum von 400 nm bis 2000 nm und beträgt $v_{achr}$ (Frontgruppe) > 200.

Vorzugsweise ist ferner vorgesehen, dass für die Achromat-Abbezahl der Frontgruppe $v_{achr}$ (Frontgruppe) für ein Teilspektrum, welches von 400 nm bis 700 nm reicht, wertemäßig gilt, dass $v_{achr}$ (Frontgruppe) > 300.

Im Allgemeinen kann vorzugsweise die untere Grenze des Spektrums mit $\lambda_1$ und die obere Grenze des Spektrums mit $\lambda_2$ bezeichnet werden. In diesem Fall gilt für eine Achromat-Abbezahl der Frontgruppe $v_{achr}$ (Frontgruppe) über das gesamte Spektrum von $\lambda_1$ bis $\lambda_2$, dass $v_{achr}$ (Frontgruppe) > 200.

Vorzugsweise kann vorgesehen sein, dass bei einem Zweifach-Kittglied in der Frontgruppe für die in dem Zweifach-Kittglied verwendete Sammellinse gilt $v_d$ > 60.

Vorzugsweise kann vorgesehen sein, dass bei einem Dreifach-Kittglied in der Frontgruppe, welches eine oder mehrere Sammellinsen enthält, für mindestens eine der Sammellinsen gilt $v_d$ > 60.

Besonders bevorzugt ist eine Ausführungsform, bei der die Frontgruppe, die Zoomgruppe und die Hauptgruppe für einen großen Spektralbereich farbkorrigiert sind.

Vorzugsweise ist die Zoomgruppe dazu eingerichtet, verschiedene Brennweitenstellungen einzunehmen.

Besonders bevorzugt ist eine Ausführungsform, bei der für die Achromat-Abbezahl einer Kombination aus der Frontgruppe, der Zoomgruppe und der Hauptgruppe in einem Spektrum von 400 nm bis 2000 nm gilt, dass $v_{achr}$ (Frontgruppe + Zoomgruppe + Hauptgruppe) > 200.

Besonders bevorzugt ist die Kombination derart eingerichtet, dass dies eintritt, wenn sich die Zoomgruppe in einer Position einer längsten Brennweitenstellung befindet.

Es kann in einer vorteilhaften Ausführungsform der Optikvorrichtung vorgesehen sein, dass die Hauptgruppe derart ausgestaltet ist, dass die Hauptgruppe aus einer ersten Teilgruppe und einer zweiten Teilgruppe ausgebildet ist.

In einer vorteilhaften Weiterbildung der erfindungsgemäßen Optikvorrichtung kann vorgesehen sein, dass die Hauptgruppe zwei voneinander beabstandete Teilgruppen aufweist, wobei zwischen den Teilgruppen eine Scaneinrichtung angeordnet ist.

Insbesondere kann vorgesehen sein, dass der Abstand zwischen der ersten Teilgruppe und der zweiten Teilgruppe so groß ist, dass zwischen diesen beiden Teilgruppen die Scaneinrichtung integriert werden kann.

Es kann in vorteilhafter Weise vorgesehen sein, dass die Scaneinrichtung für eine Bildstabilisierung genutzt wird.

In einer besonders vorteilhaften Ausführungsform kann vorgesehen sein, dass die Scaneinrichtung vor dem Strahlteilerelement angeordnet ist. Dies ist von Vorteil, da die Scaneinrichtung hierdurch auf alle Detektoreinrichtungen einwirken kann.

In weiteren möglichen Ausführungsformen, bei denen die Konstruktion der Optikvorrichtung in der vorbeschriebenen Weise unter Berücksichtigung der vorbeschriebenen Farbkorrektur in der Frontgruppe, der Zoomgruppe und der Hauptgruppe umgesetzt ist, können das Strahlteilerelement und die Detektorabbildungsgruppen auf vielfältige Weise ausgebildet sein. Hierdurch ergibt sich eine große konstruktive Freiheit und eine vorteilhafte Anpassbarkeit verschiedener Ausgangssituationen.

In einer vorteilhaften Weiterbildung der erfindungsgemäßen Optikvorrichtung kann vorgesehen sein, dass das Strahlteilerelement als Teilerprisma ausgebildet ist.

Eine Ausbildung des Strahlteilerelements als Teilerprisma hat den Vorteil, dass hierdurch die eingehende Strahlung auf einfache und effiziente Weise aufgeteilt werden kann.

In einer vorteilhaften Weiterbildung der erfindungsgemäßen Optikvorrichtung kann vorgesehen sein, dass das Strahlteilerelement derart gestaltet ist, dass ein Winkel zwischen der gemeinsamen optischen Achse und der ersten optischen Achse und/oder der zweiten optischen Achse an einer Teilerfläche kleiner als 90°, vorzugsweise kleiner als 80°, besonders bevorzugt zwischen 40° und 60°, ausgebildet ist.

In der Optikvorrichtung ist das Teilerprisma vorzugsweise so gestaltet, dass eine Umlenkung der optischen Achse an der Teilerfläche für eine zweite Abbildungseinheit kleiner als 90° ist.

Die zweite Abbildungseinheit besteht vorzugsweise aus der zweiten Detektorabbildungsgruppe sowie der zweiten Detektoreinrichtung.

In vorteilhafter Weise weist die Teilerfläche eine geringe Kippung auf. Je geringer die Kippung der Teilerfläche ausgebildet ist, desto höher ist eine Effizienz der Teilerschicht, da die Effizienz der Teilerschicht von einem Einfallswinkel auf die Teilerschicht abhängig ist.

In einer vorteilhaften Weiterbildung der erfindungsgemäßen Optikvorrichtung kann vorgesehen sein, dass das Strahlteilerelement aus mehreren Einzelprismen derart zusammengesetzt ist, dass die Strahlung auf drei oder mehr optische Achsen aufteilbar ist, wobei vorzugsweise entlang einer jeden optischen Achse eine Detektor-Abbildungsgruppe und eine Detektoreinrichtung angeordnet sind.

Vorzugsweise ist in der Optikvorrichtung das Teilerprisma so aus den Einzelprismen zusammengesetzt, dass eine Strahlaufteilung auf drei Abbildungseinheiten möglich ist.

Zusätzlich zu den bereits vorhandenen Abbildungseinheiten kann entlang einer dritten optischen Achse eine zusätzliche dritte Abbildungseinheit vorgesehen sein. Diese weist vorzugsweise eine dritte Detektor-Abbildungsgruppe sowie eine dritte Detektoreinrichtung auf. Vorzugsweise besteht die dritte Abbildungseinheit aus der dritten Detektor-Abbildungsgruppe und der dritten Detektoreinrichtung.

Die Aufteilung der Strahlung erfolgt hier vorzugsweise innerhalb des vorzugsweise als Prismenblock ausgebildeten Strahlteilerelements.

In einer weiteren möglichen Ausführungsform kann vorgesehen sein, dass in der Optikvorrichtung das Teilerprisma so aus Einzelprismen zusammengesetzt ist, dass eine

Strahlaufteilung auf vier Abbildungseinheiten möglich ist. Zusätzlich zu den bereits vorhandenen Abbildungseinheiten ist entlang einer vierten optischen Achse eine zusätzliche vierte Abbildungseinheit vorgesehen, welche aus einer vierten Abbildungsgruppe und einem vierten Detektor ausgebildet ist, vorzugsweise aus diesem besteht. Auch in dieser Ausführungsform erfolgt die Aufteilung der Strahlung innerhalb des als Prismenblock ausgebildeten Strahlteilerelements.

In analoger Weise können nach diesem Prinzip der Prismenerweiterung auch noch weitere Abbildungseinheiten ergänzt werden.

In einer vorteilhaften Weiterbildung kann die erfindungsgemäße Optikvorrichtung mindestens eine Öffnungszahl von f/8, vorzugsweise eine Öffnungszahl von f/4 oder kleiner, für alle Farbkanäle aufweisen.

Vorzugsweise weist die erfindungsgemäße Optikvorrichtung bzw. das multispektrale Zoomobjektiv für alle Farbkanäle mindestens eine Öffnungszahl von f/8 auf. Besonders bevorzugt beträgt die Öffnungszahl f/4 oder kleiner.

Aus dem Stand der Technik, insbesondere aus den Schriften DE 10 2010 054 764 A1, DE 43 10 660 A1, DE 36 22 125 C2 und US 4,190,324 sind apochromatisch korrigierte Objektive bekannt. Insbesondere sind aus dem Stand der Technik für einen visuellen Spektralbereich von 480 nm bis 656 nm, apochromatisch korrigierte Objektive mit Öffnungszahlen zwischen f/6 und f/10 bekannt.

Im Gegensatz zu diesen aus dem Stand der Technik bekannten apochromatischen Objektiven ermöglicht die erfindungsgemäße Optikvorrichtung eine ausreichende Öffnungszahl sowie eine ausreichende chromatische Korrektur in einem Spektralbereich von 400 nm bis 2000 nm.

Vorzugsweise weist die Frontgruppe der Optikvorrichtung mindestens eine Öffnungszahl von f/4, vorzugsweise f/2.8 oder größer, auf. Dies kann insbesondere durch eine Verkleinerung des vorgenannten Nenners erfolgen.

Die Offenbarung betrifft ferner einen Optikapparat mit einem Teil der in Anspruch 1 genannten Merkmalen, wobei im Vergleich zu der erfindungsgemäßen Optikvorrichtung auf das Strahlteilerelement, den zweiten Arm des Strahlengangs, die zweite optische Achse und die zweite Detektoreinrichtung sowie die zweite Detektor-Abbildungsgruppe verzichtet wird.

Die eine derart vereinfachte Ausführungsform betreffenden Weiterbildungen der erfindungsgemäßen Optikvorrichtung sind auch auf den offenbarten Optikapparat anwendbar.

Der offenbarte Optikapparat hat hinsichtlich der Farbkorrektur ähnliche vorteilhafte Eigenschaften wie die vorbeschriebene erfindungsgemäße Optikvorrichtung. Es kann bei dem offenbarten Optikapparat vorgesehen sein, dass die erste Detektoreinrichtung für ein gesamtes Spektrum der Strahlung von 435 nm bis 1040 nm sensitiv ist.

Hierdurch kann auf eine Aufteilung des Spektrums mittels der Strahlteilereinrichtung in vorteilhafter Weise verzichtet werden.

Ferner kann in vorteilhafter Weise auch auf eine Aufteilung des Strahlengangs die erste optische Achse und die zweite optische Achse verzichtet werden.

Für die Frontgruppe des offenbarten Optikapparats kann vorgesehen sein, dass die Achromat-Abbezahl $v_{achr}$ (Frontgruppe) = 224,75 in einem Spektrum von 435 nm bis 1040 nm beträgt.

Es kann ferner vorgesehen sein, dass bei dem offenbarten Optikapparat die Achromat-Abbezahl der Frontgruppe $v_{achr}$ (Frontgruppe) = 537,15 in einem Spektrum von 435 nm bis 706 nm beträgt.

Bei dem gesamten offenbarten Optikapparat gilt für die Achromat-Abbezahl einer Kombination aus der Frontgruppe, der Zoomgruppe und der Hauptgruppe in einem Spektrum von 435 nm bis 1040 nm für eine längste Brennweitenstellung der Zoomgruppe vorzugsweise $v_{achr}$ (Frontgruppe + Zoomgruppe + Hauptgruppe) = 585,71.

An dieser Stelle wird ferner ein Verfahren zum Auffangen und Abbilden einer von einer Objektszene ausgehenden Strahlung offenbart.

Bei dem offenbarten Verfahren zum Auffangen und Abbilden einer von einer Objektszene ausgehenden Strahlung wird eine Mehrzahl an optischen Elementen in einem Strahlengang verwendet. Hierbei werden in einer Ausbreitungsrichtung der Strahlung nacheinander eine Frontgruppe, eine Zoomgruppe, eine Irisblende, eine Hauptgruppe und ein Strahlteilerelement, welche auf einer optischen Achse angeordnet sind, durchlaufen. Hierbei wird der Strahlengang durch das Strahlteilerelement in zwei Arme aufgeteilt und ein Spektrum der Strahlung wird durch das Strahlteilerelement in einen ersten Spektralbereich in einem ersten Arm des Strahlengangs und in einen zweiten Spektralbereich in einem zweiten Arm des Strahlengangs aufgeteilt. Mittels des Strahlteilerelements wird die Strahlung wenigstens entlang einer ersten optischen Achse des ersten Arms auf eine erste Detektoreinrichtung geleitet und entlang einer zweiten optischen Achse des zweiten Arms auf eine zweite Detektoreinrichtung geleitet. Erfindungsgemäß wird während eines Zoomens die sich verändernde Objektszene mittels auf geeignete Weise optisch korrigierter optischer Elemente auf allen Detektoreinrichtungen simultan scharf abgebildet.

Besonders bevorzugt können die erfindungsgemäße Optikvorrichtung und/oder das offenbarte Verfahren und/oder der offenbarte Optikapparat zur Verwendung in einer Waffe, insbesondere bei der Visierung einer Waffe, eingesetzt werden.

Merkmale, die im Zusammenhang mit einem der Gegenstände der Erfindung, namentlich gegeben durch die erfindungsgemäße Optikvorrichtung, den offenbarten Optikapparat und das offenbarte Verfahren, beschrieben wurden, sind auch für die anderen Gegenstände der Erfindung vorteilhaft umsetzbar. Ebenso können Vorteile, die im Zusammenhang mit einem der Gegenstände der Erfindung genannt wurden, auch auf die anderen Gegenstände der Erfindung bezogen verstanden werden.

Ergänzend sei darauf hingewiesen, dass Begriffe wie "umfassend", "aufweisend" oder "mit" keine anderen Merkmale oder Schritte ausschließen. Ferner schließen Begriffe wie "ein" oder "das", die auf eine Einzahl von Schritten oder Merkmalen hinweisen, keine Mehrzahl von Merkmalen oder Schritten aus - und umgekehrt.

In einer puristischen Ausführungsform der Erfindung kann allerdings auch vorgesehen sein, dass die in der Erfindung mit den Begriffen "umfassend", "aufweisend" oder "mit" eingeführten Merkmale abschließend aufgezählt sind. Dementsprechend kann eine oder können mehrere Aufzählungen von Merkmalen im Rahmen der Erfindung als abgeschlossen betrachtet werden, beispielsweise jeweils für jeden Anspruch betrachtet. Die Erfindung kann beispielsweise ausschließlich aus den in Anspruch 1 genannten Merkmalen bestehen.

Es sei erwähnt, dass Bezeichnungen wie "erstes" oder "zweites" etc. vornehmlich aus Gründen der Unterscheidbarkeit von jeweiligen Vorrichtungs- oder Verfahrensmerkmalen verwendet werden und nicht unbedingt andeuten sollen, dass sich Merkmale gegenseitig bedingen oder miteinander in Beziehung stehen.

Nachfolgend werden Ausführungsbeispiele der Erfindung anhand der Zeichnung näher beschrieben.

Die Figuren zeigen jeweils bevorzugte Ausführungsbeispiele, in denen einzelne Merkmale der vorliegenden Erfindung in Kombination miteinander dargestellt sind. Merkmale eines Ausführungsbeispiels sind auch losgelöst von den anderen Merkmalen des gleichen Ausführungsbeispiels umsetzbar und können dementsprechend von einem Fachmann ohne Weiteres zu weiteren sinnvollen Kombinationen und Unterkombinationen mit Merkmalen anderer Ausführungsbeispiele verbunden werden.

In den Figuren sind funktionsgleiche Elemente mit denselben Bezugszeichen versehen.

Es zeigen:

Figur 1     eine schematische Darstellung einer möglichen Ausführungsform einer erfindungsgemäßen Optikvorrichtung;

Figur 2     eine schematische Darstellung einer weiteren möglichen Ausführungsform der erfindungsgemäßen Optikvorrichtung;

Figur 3     eine schematische Darstellung einer weiteren möglichen Ausführungsform der erfindungsgemäßen Optikvorrichtung;

Figur 4      eine schematische Darstellung einer weiteren möglichen Ausführungsform der erfindungsgemäßen Optikvorrichtung;

Figur 5      eine schematische Darstellung einer weiteren möglichen Ausführungsform der erfindungsgemäßen Optikvorrichtung;

Figur 6      eine schematische Darstellung einer weiteren möglichen Ausführungsform der erfindungsgemäßen Optikvorrichtung;

Figur 7      eine schematische Darstellung einer möglichen Ausführungsform einer Frontgruppe der erfindungsgemäßen Optikvorrichtung;

Figur 8      eine schematische Darstellung einer weiteren möglichen Ausführungsform der Frontgruppe der erfindungsgemäßen Optikvorrichtung; und

Figur 9      eine schematische Darstellung einer weiteren möglichen Ausführungsform der erfindungsgemäßen Optikvorrichtung.

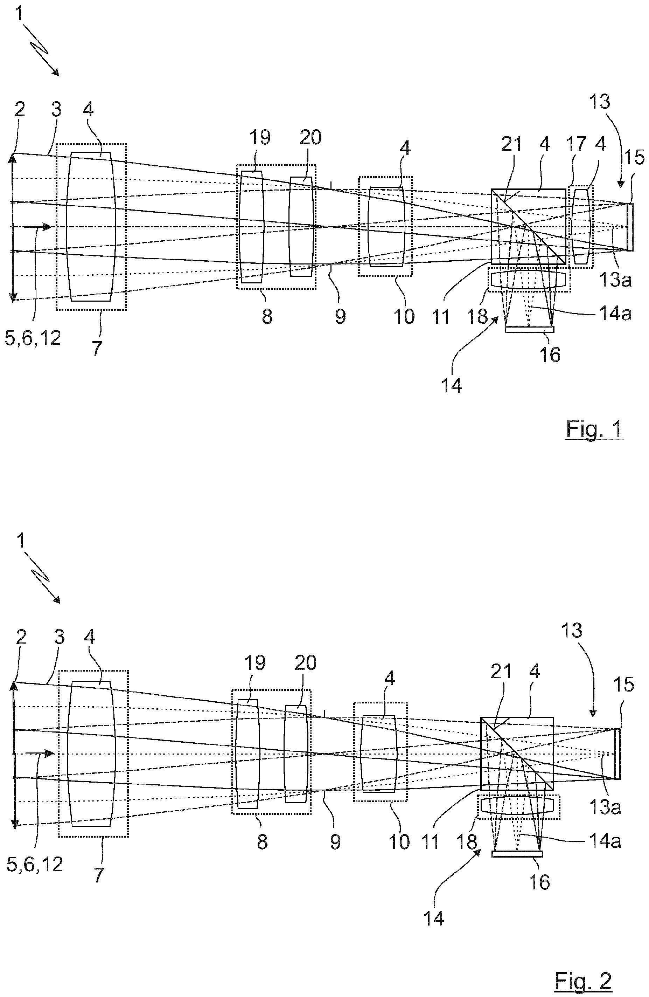

Figur 1 zeigt eine schematische Darstellung einer möglichen Ausführungsform einer Optikvorrichtung 1 zum Auffangen und Abbilden einer von einer Objektszene 2 ausgehenden Strahlung 3. Die Objektszene 2 ist in dem in Figur 1 dargestellten Ausführungsbeispiel durch einen Pfeil symbolisiert.

Die Optikvorrichtung 1 umfasst eine Mehrzahl an optischen Elementen 4 in einem Strahlengang 5, wobei in einer Ausbreitungsrichtung der Strahlung 3, welche in Figur 1 durch einen Pfeil 6 dargestellt ist, nacheinander eine Frontgruppe 7, eine Zoomgruppe 8, eine Irisblende 9, eine Hauptgruppe 10 und ein Strahlteilerelement 11 auf einer gemeinsamen optischen Achse 12 angeordnet sind. Hierbei ist das Strahlteilerelement 11 zur Aufteilung des Strahlengangs 5 in zwei Arme 13,14 und zur Aufteilung eines Spektrums der Strahlung 3 in einen ersten Spektralbereich in einem ersten Arm 13 des Strahlengangs 5 und einen zweiten Spektralbereich in einem zweiten Arm 14 des Strahlengangs 5 eingerichtet. Hierbei ist nach dem Strahlteilerelement 11 wenigstens entlang einer ersten optischen Achse 13a des ersten Arms 13 eine erste Detektoreinrichtung 15 angeordnet. Ferner ist nach dem Strahlteilerelement 11 wenigstens entlang einer zweiten optischen Achse 14a des zweiten Arms 14 eine zweite Detektoreinrichtung 16 angeordnet. Bei der Optikvorrichtung 1 sind die optischen Elemente 4 wenigstens teilweise derart optisch korrigiert, dass auf allen Detektoreinrichtungen 15, 16 während eines Zoomens die sich verändernde Objektszene 2 scharf abgebildet ist.

In dem in Figur 1 dargestellten Ausführungsbeispiel ist vorzugsweise entlang der ersten optischen Achse 13a eine erste Detektor-Abbildungsgruppe 17 und die erste Detektoreinrichtung 15 angeordnet. Zusätzlich ist in dem in Figur 1 dargestellten Ausführungsbeispiel entlang der zweiten optischen Achse 14a eine zweite Detektor-Abbildungsgruppe 18 sowie die zweite Detektoreinrichtung 16 angeordnet.

Ferner weist in dem in Figur 1 dargestellten Ausführungsbeispiel der Optikvorrichtung 1 die Zoomgruppe 8 eine erste Untergruppe 19, welche auch als Variatorgruppe bezeichnet werden kann, sowie eine zweite Untergruppe 20, welche auch als Kompensatorgruppe bezeichnet werden kann, auf. Die erste Untergruppe 19 und die zweite Untergruppe 20 sind entlang der gemeinsamen optischen Achse 12 vorzugsweise beweglich angeordnet.

Ferner sind in dem in Figur 1 dargestellten Ausführungsbeispiel der Optikvorrichtung 1 vorzugsweise ausschließlich die erste Untergruppe 19 und die zweite Untergruppe 20 beweglich angeordnet.

Bei der in Figur 1 dargestellten Ausführungsform der Optikvorrichtung 1 sind vorzugsweise die optischen Elemente 4 teilweise oder vollständig, besonders bevorzugt über einen Spektralbereich der Strahlung 3 von 400 nm bis 2000 nm, chromatisch korrigiert.

Vorzugsweise ist ferner bei dem in Figur 1 dargestellten Ausführungsbeispiel der Optikvorrichtung 1 das Strahlteilerelement 11 als Teilerprisma ausgebildet.

Figur 2 zeigt eine schematische Darstellung einer weiteren möglichen Ausführungsform der Optikvorrichtung 1.

Bei dem in Figur 2 dargestellten Ausführungsbeispiel fehlt im Vergleich zu dem in Figur 1 dargestellten Ausführungsbeispiel die erste Detektor-Abbildungsgruppe 17.

Bei dem in Figur 2 dargestellten Ausführungsbeispiel der Optikvorrichtung 1 ist demnach vorzugsweise entlang der ersten optischen Achse 13a lediglich die erste Detektoreinrichtung 15 angeordnet, während entlang der zweiten optischen Achse 14a die zweite Detektor-Abbildungsgruppe 18 sowie die zweite Detektoreinrichtung 16 angeordnet sind. Hierbei weisen die erste und die zweite Detektoreinrichtung 15, 16 wenigstens annähernd gleiche Bildfeldformate auf.

Die in Figur 2 dargestellte Ausführungsform ist insbesondere dann von Vorteil, wenn Brennweitenunterschiede für die Strahlung in dem ersten Arm 13 und in dem zweiten Arm 14 vernachlässigbar sind.

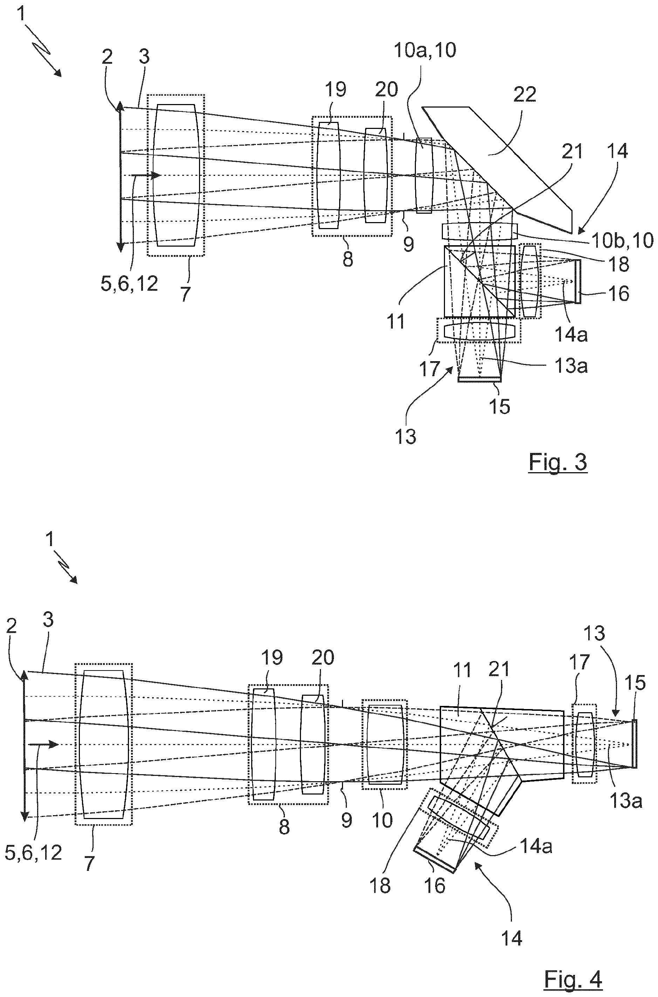

Figur 3 zeigt eine schematische Darstellung einer weiteren möglichen Ausführungsform der Optikvorrichtung 1.

Bei dem in Figur 3 dargestellten Ausführungsbeispiel der Optikvorrichtung 1 weist die Hauptgruppe 10 zwei voneinander beabstandete Teilgruppen 10a und 10b auf. Hierbei ist zwischen den Teilgruppen 10a, 10b eine Scaneinrichtung 22 angeordnet.

Die Hauptgruppe 10 wurde also im Vergleich zu dem in Figur 1 dargestellten Ausführungsbeispiel so umgestaltet, dass sie sich aus den zwei Teilgruppen 10a, 10b zusammensetzt und deren Abstand zueinander so gewählt ist, dass zwischen den beiden Teilgruppen 10a, 10b die Scanvorrichtung 22 integriert werden kann.

Vorzugsweise kann die Scanvorrichtung 22 für eine Bildstabilisierung genutzt werden. Die Position der Scanvorrichtung 22 vor dem Strahlteilerelement 11 ist hierbei besonders vorteilhaft, da sie dann auf die erste und die zweite Detektoreinrichtung 15, 16 wirken kann.

Sind die Ausführungsformen der Optikvorrichtung 1 gemäß den Prinzipien, welche in den Figuren 1 bis 3 erklärt sind, wirkend, insbesondere mit einer Farbkorrektur in der Frontgruppe 8, der Zoomgruppe 9 sowie der Hauptgruppe 10, dann lassen sich das Strahlteilerelement 11 sowie die Detektor-Abbildungsgruppen 17, 18 in vielfältiger Weise gestalten. Derartige Gestaltungsformen sind insbesondere in den Figuren 4 bis 6 dargestellt.

Figur 4 zeigt eine schematische Darstellung einer weiteren möglichen Ausführungsform der Optikvorrichtung 1.

Ferner ist in dem in Figur 4 dargestellten Ausführungsbeispiel der Optikvorrichtung 1 das Strahlteilerelement 11 vorzugsweise derart gestaltet, dass ein Winkel zwischen der gemeinsamen optischen Achse 12 und der ersten optischen Achse 13a und/oder der zweiten optischen Achse 14a an einer Teilerfläche 21 kleiner als 90°, vorzugsweise kleiner als 80°, besonders bevorzugt zwischen 40° und 60° ausgebildet ist.

Bei dem in Figur 4 dargestellten Ausführungsbeispiel ist eine zweite Abbildungseinheit aus der zweiten Detektor-Abbildungsgruppe 18 sowie der zweiten Detektoreinrichtung 16 ausgebildet. Bei dem in Figur 4 dargestellten Ausführungsbeispiel gilt: je geringer eine Kippung der Teilerfläche 21 ausgebildet ist, desto besser ist eine Effizienz einer nicht näher dargestellten Teilerschicht an der Teilerfläche 21, da die Effizienz von einem Einfallswinkel der Strahlung 3 auf die Teilerfläche 21 abhängig ist.

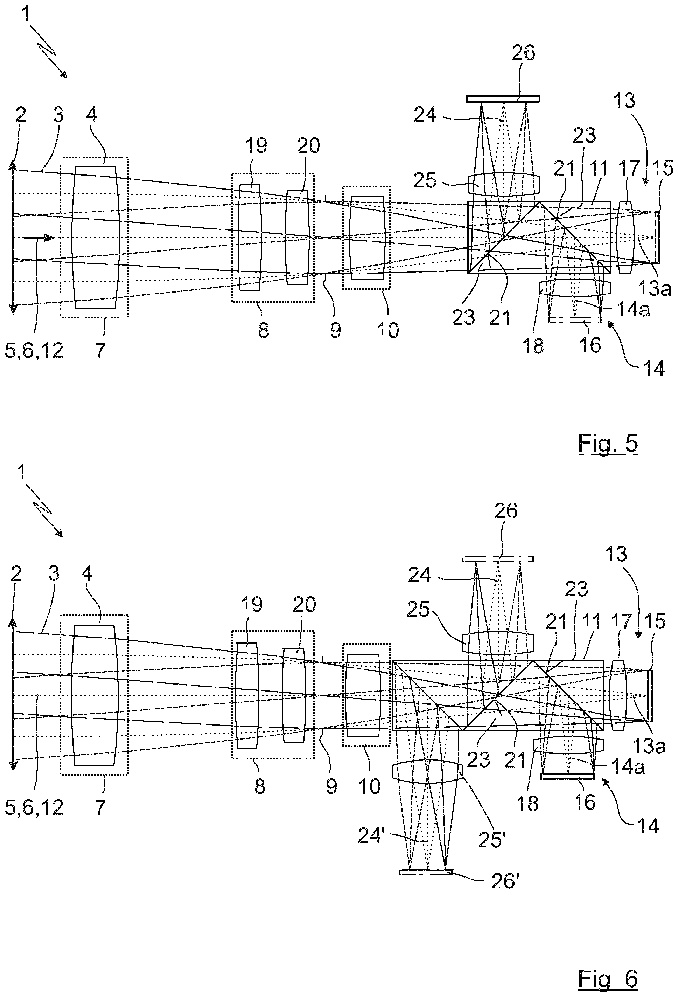

Figur 5 zeigt eine schematische Darstellung einer weiteren möglichen Ausführungsform der Optikvorrichtung 1.

Bei dem in Figur 5 dargestellten Ausführungsbeispiel der Optikvorrichtung 1 ist das Strahlteilerelement 11 aus mehreren Einzelprismen 23 derart zusammengesetzt, dass die Strahlung 3 auf drei oder mehr optische Achsen 13a, 14a, 24 aufteilbar ist. Hierbei ist vorzugsweise entlang einer jeden optischen Achse 13a, 14a, 24 jeweils eine Detektor-Abbildungsgruppe 17, 18, 25 und jeweils eine Detektoreinrichtung 15, 16, 26 angeordnet.

Figur 6 zeigt eine schematische Darstellung einer weiteren möglichen Ausführungsform der erfindungsgemäßen Optikvorrichtung 1.

Die in Figur 6 dargestellten Ausführungsform der Optikvorrichtung 1 zeigt im Vergleich zu der in Figur 5 dargestellten Ausführungsform der Optikvorrichtung 1 eine Erweiterung um eine weitere Detektor-Abbildungsgruppe 25' und eine weitere Detektoreinrichtung 26' auf einer weiteren optischen Achse 24', wobei das Strahlteilerelement 11 ebenfalls aus mehreren Einzelprismen 23 zusammengesetzt ist.

Bei dem in Figur 6 dargestellten Ausführungsbeispiel der Optikvorrichtung 1 ist das Strahlteilerelement 11 aus mehreren Einzelprismen 23 derart zusammengesetzt, dass die Strahlung 3 auf vier optische Achsen 13a, 14a, 24 und 24' aufteilbar ist. Hierbei ist vorzugsweise entlang einer jeden optischen Achse 13a, 14a, 24, 24' jeweils eine Detektor-Abbildungsgruppe 17, 18, 25, 25' und jeweils eine Detektoreinrichtung 15, 16, 26, 26' angeordnet.

Auch bei dem in Figur 6 dargestellten Ausführungsbeispiel erfolgt die Aufteilung der Strahlung 3 innerhalb des Prismenblocks des Strahlteilerelements 11. Nach dem in den Figuren 5 und 6 dargestellten Prinzip der Prismenerweiterung könnten auch noch weitere Abbildungseinheiten ergänzt werden.

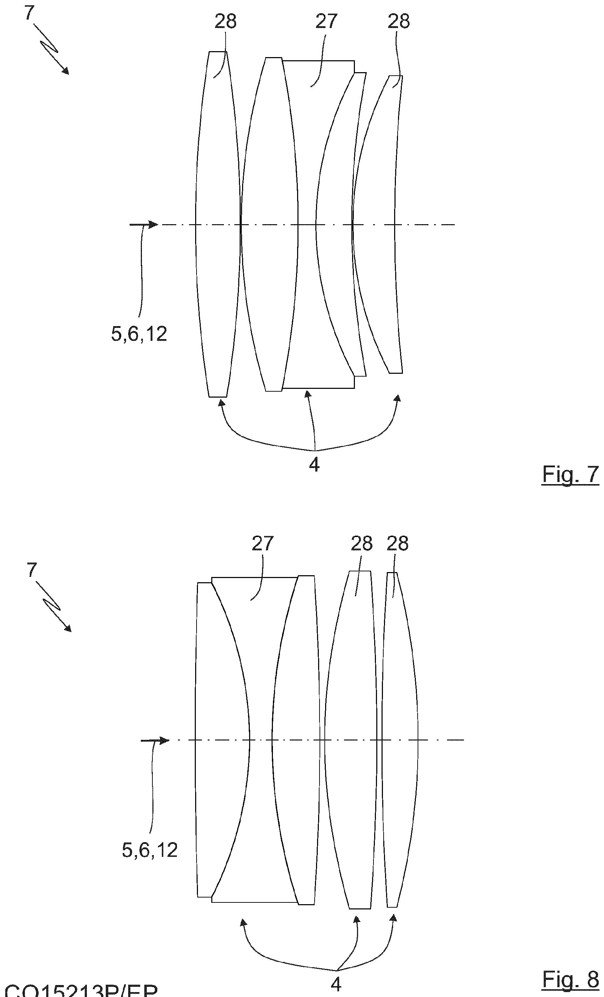

Figur 7 zeigt eine schematische Darstellung einer möglichen Ausführungsform der Frontgruppe 7 der Optikvorrichtung 1.

Bei dem in Figur 7 dargestellten Ausführungsbeispiel ist die Frontgruppe 7 vorzugsweise chromatisch korrigiert.

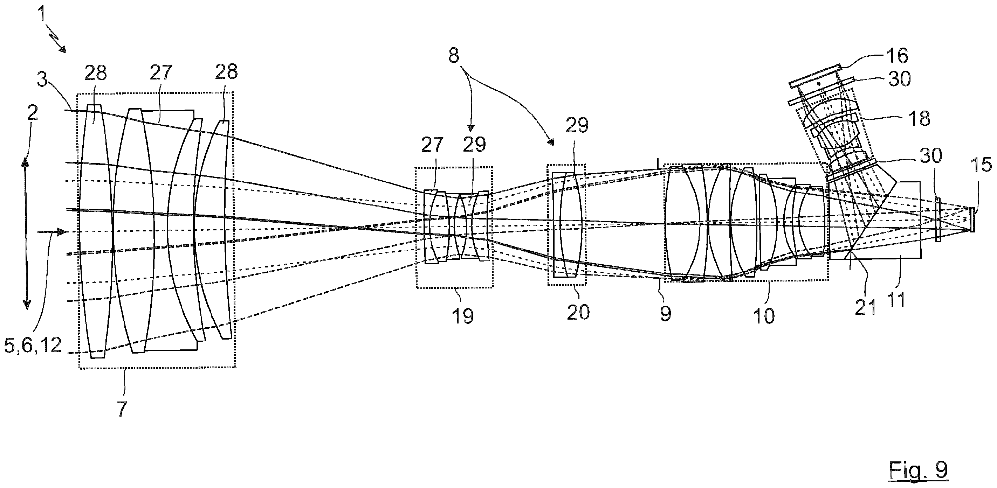

Ferner ist bei dem in Figur 7 dargestellten Ausführungsbeispiel in der Frontgruppe 7 ein Dreifachkittglied 27 vorhanden. Alternativ oder zusätzlich kann auch vorgesehen sein, dass in der Frontgruppe 7 ein Zweifachkittglied 29 (in Figur 7 nicht dargestellt, siehe Figur 9) vorhanden ist.

In dem in Figur 7 dargestellten Ausführungsbeispiel sind ferner in der Frontgruppe 7 zusätzlich zwei Einzellinsen 28 vorgesehen.

Bei dem in Figur 7 dargestellten Ausführungsbeispiel sind die einzelnen optischen Elemente 4 in der Reihenfolge Einzellinse 28 - Dreifachkittglied 27- Einzellinse 28 angeordnet.

Figur 8 zeigt eine schematische Darstellung einer weiteren möglichen Ausführungsform der Frontgruppe 7 der Optikvorrichtung 1.

Bei dem in Figur 8 dargestellten Ausführungsbeispiel weist die Frontgruppe 7 ebenfalls ein Dreifachkittglied 27 sowie zwei Einzellinsen 28 auf. Allerdings sind die optischen Elemente 4 in diesem Fall in der Reihenfolge Dreifachkittglied 27 - Einzellinse 28 - Einzellinse 28 angeordnet.

In den Figuren 7 und 8 bezieht sich die Reihenfolge auf die Ausbreitungsrichtung 6 der Strahlung 3.

Figur 9 zeigt eine schematische Darstellung einer weiteren möglichen Ausführungsform der Optikvorrichtung 1. In Figur 9 ist beispielhaft eine Optikvorrichtung 1 bzw. ein Zoomobjektiv dargestellt, welches analog zu den Prinzipskizzen gemäß Figur 2 und Figur 4 ausgeführt ist.

In dem in Figur 9 dargestellten Ausführungsbeispiel ist die erste Detektoreinrichtung 15 zur Detektion eines visuellen Spektralbereichs der Strahlung 3 eingerichtet. Mithin kann in dem in Figur 9 dargestellten Ausführungsbeispiel die erste Detektoreinrichtung 15 als VIS-Detektor bezeichnet werden.

In dem in Figur 9 dargestellten Ausführungsbeispiel der Optikvorrichtung 1 ist ferner die zweite Detektoreinrichtung 16 zur Detektion eines kurzwelligen Infrarotspektralbereichs der Strahlung 3 eingerichtet. Mithin kann in dem in Figur 9 dargestellten Ausführungsbeispiel die zweite Detektoreinrichtung 16 als SWIR-Detektor bezeichnet werden.

Bei der beispielhaften Ausführungsform der Optikvorrichtung 1 bzw. des Zoomobjektivs gemäß Figur 9 gilt für die Achromat-Abbezahl der Frontgruppe 7 in einem Spektralbereich der Strahlung 3 von 400 nm bis 2000 nm: $v_{achr}$ (Frontgruppe) = 414,38.

Ferner gilt bei der in Figur 9 dargestellten beispielhaften Ausführungsform der Optikvorrichtung 1 bzw. des Zoomobjektivs für die Achromat-Abbezahl einer Kombination aus der Frontgruppe 7, der Zoomgruppe 8 und der Hauptgruppe 10 in einem Spektralbereich von 400 nm bis 2000 nm der Strahlung 3 für eine längste Brennweitenstellung: $v_{achr}$ (Frontgruppe + Zoomgruppe + Hauptgruppe) = 672,42.

In dem in Figur 9 dargestellten Ausführungsbeispiel weist die erste Untergruppe 19 vorzugsweise ein Dreifachkittglied 27 und ein Zweifachkittglied 29 auf.

Ferner weist in dem in Figur 9 dargestellten Ausführungsbeispiel die zweite Untergruppe 20 vorzugsweise ein Zweifachkittglied 29 auf.

Außerdem sind eine Mehrzahl an vorzugsweise planen und für die Strahlung 3 transparenten Fensterplatten 30 vorgesehen, um eine Verschmutzung der dahinterliegenden Bauteile zu vermeiden.

Hinsichtlich der aus Gründen der Übersichtlichkeit unbezeichneten Teile bzw. Elemente der Optikvorrichtung 1 sowie der Erläuterung der Bezugszeichen in Figur 9 sei auf die Figuren 1 bis 8 verwiesen.

Bei den in den Figuren 1 bis 9 dargestellten Ausführungsbeispielen der Optikvorrichtung 1 weist diese mindestens eine Öffnungszahl von f/8, vorzugsweise eine Öffnungszahl von f/4 oder kleiner, für alle Farbkanäle auf.

Bezugszeichenliste:

| | |
|---|---|
| 1 | Optikvorrichtung |
| 2 | Objektszene |
| 3 | Strahlung |
| 4 | optisches Element |
| 5 | Strahlengang |
| 6 | Pfeil in Ausbreitungsrichtung |
| 7 | Frontgruppe |
| 8 | Zoomgruppe |
| 9 | Irisblende |
| 10 | Hauptgruppe |
| 10a,b | Teilgruppe |
| 11 | Strahlteilerelement |
| 12 | optische Achse |
| 13 | erster Arm |
| 13a | erste optische Achse |
| 14 | zweiter Arm |
| 14a | zweite optische Achse |
| 15 | erste Detektoreinrichtung |
| 16 | zweite Detektoreinrichtung |
| 17 | erste Detektor-Abbildungsgruppe |
| 18 | zweite Detektor-Abbildungsgruppe |
| 19 | erste Untergruppe |
| 20 | zweite Untergruppe |
| 21 | Teilerfläche |
| 22 | Scaneinrichtung |
| 23 | Einzelprisma |
| 24 | dritte optische Achse |
| 25 | dritte Detektor-Abbildungsgruppe |
| 26 | dritte Detektoreinrichtung |

24'     vierte optische Achse
25'     vierte Detektor-Abbildungsgruppe
26'     vierte Detektoreinrichtung
27      Dreifachkittglied
28      Einzellinse
29      Zweifachkittglied
30      Fenster

**Patentansprüche**

1.  Optikvorrichtung (1) zum Auffangen und Abbilden einer von einer Objektszene (2) ausgehenden Strahlung (3), mit einer Mehrzahl an optischen Elementen (4) in einem Strahlengang (5), wobei in einer Ausbreitungsrichtung der Strahlung (3) nacheinander eine Frontgruppe (7), eine Zoomgruppe (8), eine Irisblende (9), eine Hauptgruppe (10) und ein Strahlteilerelement (11) auf einer gemeinsamen optischen Achse (12) angeordnet sind, wobei das Strahlteilerelement (11) zur Aufteilung des Strahlengangs (5) in zwei Arme (13,14) und eines Spektrums der Strahlung (3) in einen ersten Spektralbereich in einem ersten Arm (13) des Strahlengangs (5) und einen zweiten Spektralbereich in einem zweiten Arm (14) des Strahlengangs eingerichtet ist, wobei nach dem Strahlteilerelement (11) wenigstens

    - entlang einer ersten optischen Achse (13a) des ersten Arms (13) eine erste Detektoreinrichtung (15) angeordnet ist, und
    - entlang einer zweiten optischen Achse (14a) des zweiten Arms (14) eine zweite Detektoreinrichtung (16) angeordnet ist,

    **dadurch gekennzeichnet, dass**
    die optischen Elemente (4) wenigstens teilweise derart optisch korrigiert sind, dass auf allen Detektoreinrichtungen (15,16) während eines Zoomens die sich verändernde Objektszene (2) scharf abgebildet ist.

2.  Optikvorrichtung (2) nach Anspruch 1,
    **dadurch gekennzeichnet, dass**

    - entlang der ersten optischen Achse (13a) eine erste Detektor-Abbildungsgruppe (17) und die erste Detektoreinrichtung (15) angeordnet sind, und/oder
    - entlang der zweiten optischen Achse (14a) eine zweite Detektor-Abbildungsgruppe (18) und die zweite Detektoreinrichtung (16) angeordnet sind.

3.  Optikvorrichtung (1) nach Anspruch 1,
    **dadurch gekennzeichnet, dass**

    - entlang der ersten optischen Achse (13a) lediglich die erste Detektoreinrichtung (16) angeordnet ist, und
    - entlang der zweiten optischen Achse (14a) die zweite Detektor-Abbildungsgruppe (18) und die zweite Detektoreinrichtung (16) angeordnet sind,

    wobei die erste und die zweite Detektoreinrichtung (15,16) wenigstens annähernd gleiche Bildfeldformate aufweisen.

4.  Optikvorrichtung (1) nach einem der Ansprüche 1 bis 3,
    **dadurch gekennzeichnet, dass**
    die Zoomgruppe (8) eine erste Untergruppe (19) und eine zweite Untergruppe (20) aufweist, welche entlang der gemeinsamen optischen Achse (12) beweglich angeordnet sind.

5.  Optikvorrichtung (1) nach Anspruch 4,
    **dadurch gekennzeichnet, dass**
    ausschließlich die erste Untergruppe (19) und die zweite Untergruppe (20) beweglich angeordnet sind.

6.  Optikvorrichtung (1) nach einem der Ansprüche 1 bis 5,
    **dadurch gekennzeichnet, dass**
    die optischen Elemente (4) teilweise oder vollständig, vorzugsweise über einen Spektralbereich der Strahlung (3) von 400 nm - 2000 nm, chromatisch korrigiert sind.

**7.** Optikvorrichtung (1) nach einem der Ansprüche 1 bis 6,
**dadurch gekennzeichnet, dass**
die Frontgruppe (7) chromatisch korrigiert ist, wobei in der Frontgruppe (7) wenigstens ein Zwei- und/oder Dreifachkittglied (27) vorgesehen ist.

**8.** Optikvorrichtung (1) nach einem der Ansprüche 1 bis 7,
**dadurch gekennzeichnet, dass**
die Hauptgruppe (10) zwei voneinander beabstandete Teilgruppen (10a, 10b) aufweist, wobei zwischen den Teilgruppen (10a, 10b) eine Scaneinrichtung (22) angeordnet ist.

**9.** Optikvorrichtung (1) nach einem der Ansprüche 1 bis 8,
**dadurch gekennzeichnet, dass**
das Strahlteilerelement (11) als Teilerprisma ausgebildet ist.

**10.** Optikvorrichtung (1) nach einem der Ansprüche 1 bis 9,
**dadurch gekennzeichnet, dass**
das Strahlteilerelement (11) derart gestaltet ist, dass ein Winkel zwischen der gemeinsamen optischen Achse (12) und der ersten optischen Achse (13a) und/oder der zweiten optischen Achse (14a) an einer Teilerfläche (21) kleiner als 90°, vorzugsweise kleiner als 80°, besonders bevorzugt zwischen 40° und 60°, ausgebildet ist.

**11.** Optikvorrichtung (1) nach einem der Ansprüche 1 bis 10,
**dadurch gekennzeichnet, dass**
das Strahlteilerelement (11) aus mehreren Einzelprismen (23) derart zusammengesetzt ist, dass die Strahlung (3) auf drei oder mehr optische Achsen (13a,14a,24) aufteilbar ist, wobei vorzugsweise entlang einer jeden optischen Achse (13a,14a,24) eine Detektor-Abbildungsgruppe (17,18,25) und eine Detektoreinrichtung (15,16,26) angeordnet sind.

**12.** Optikvorrichtung (1) nach einem der Ansprüche 1 bis 11,
**gekennzeichnet durch**
mindestens eine Öffnungszahl von f/8, vorzugsweise eine Öffnungszahl von f/4 oder kleiner, für alle Farbkanäle.

Fig. 1

Fig. 2

Fig. 3

Fig. 4

14

Fig. 5

Fig. 6

7

28    27    28

5,6,12

4

Fig. 7

7

27    28  28

5,6,12

4

Fig. 8

CO15213P/EP

Fig. 9

Europäisches
Patentamt

European
Patent Office

Office européen
des brevets

# EUROPÄISCHER RECHERCHENBERICHT

Nummer der Anmeldung

EP 24 19 8841

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2012 005938 A1 (ZEISS CARL OPTRONICS GMBH [DE]) 26. September 2013 (2013-09-26) | 1,2,4-7, 9,11,12 | INV. G02B13/14 |
| Y | * Absätze [0005] - [0058]; Ansprüche; Abbildungen * | 10 | G02B17/08 G02B27/10 |
| | - - - - - | | |
| X | US 11 256 073 B2 (ZHANG AIZHONG [US]) 22. Februar 2022 (2022-02-22) | 1-4,6,8 | |
| Y | * Spalte 4, Zeile 56 - Spalte 20, Zeile 48; Abbildungen * | 10 | |
| | - - - - - | | |
| X | CN 108 693 634 B (XIAN INST OPTICS & PREC MECHANICS CAS) 28. Februar 2020 (2020-02-28) | 1-6,9 | |
| Y | * Absätze [0042] - [0071]; Ansprüche; Abbildungen * | 10 | |
| | - - - - - | | |
| Y,D | DE 10 2011 106585 B4 (ZEISS CARL OPTRONICS GMBH [DE]) 4. Juni 2020 (2020-06-04) * Absätze [0038] - [0054]; Abbildungen * | 10 | |
| | - - - - - | | |

RECHERCHIERTE
SACHGEBIETE (IPC)

G02B

Der vorliegende Recherchenbericht wurde für alle Patentansprüche erstellt

| Recherchenort | Abschlußdatum der Recherche | Prüfer |
|---|---|---|
| München | 25. Februar 2025 | Politsch, Erich |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 19 8841

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2025

| Im Recherchenbericht angeführtes Patentdokument | Datum der Veröffentlichung | Mitglied(er) der Patentfamilie | Datum der Veröffentlichung |
|---|---|---|---|
| DE 102012005938 A1 | 26-09-2013 | DE 102012005938 A1<br>GB 2501817 A | 26-09-2013<br>06-11-2013 |
| US 11256073 B2 | 22-02-2022 | KEINE | |
| CN 108693634 B | 28-02-2020 | KEINE | |
| DE 102011106585 B4 | 04-06-2020 | DE 102011106585 A1<br>GB 2491976 A | 20-12-2012<br>19-12-2012 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011106585 B4
- DE 102012005938 A1
- DE 10212005938 A1
- DE 102010054764 A1
- DE 4310660 A1
- DE 3622125 C2
- US 4190324 A